Europäisches Patentamt

European Patent Office

Office européen des brevets

(19)

(11) **EP 0 678 759 B1**

(12) **FASCICULE DE BREVET EUROPEEN**

(45) Date de publication et mention
de la délivrance du brevet:
**10.02.1999 Bulletin 1999/06**

(51) Int Cl.6: **G01V 3/10**

(21) Numéro de dépôt: **95400768.8**

(22) Date de dépôt: **06.04.1995**

(54) **Détecteur de proximité inductif à fréquence ajustable**

Induktiver Näherungsschalter mit einstellbarer Frequenz

Inductive proximity detector with adjustable frequency

(84) Etats contractants désignés:
**CH DE DK GB IT LI**

(30) Priorité: **18.04.1994 FR 9404701**

(43) Date de publication de la demande:
**25.10.1995 Bulletin 1995/43**

(73) Titulaire: **SCHNEIDER ELECTRIC SA**
**92100 Boulogne Billancourt (FR)**

(72) Inventeurs:
• **Leonard, Didier**
**F-16290 Moulinars (FR)**
• **Guichard, Christophe**
**F-16000 Angouleme (FR)**

(74) Mandataire: **Carias, Alain**
**Schneider Electric SA,**
**Service Propriété Industrielle,**
**33 bis, avenue du Maréchal Joffre**
**92000 Nanterre (FR)**

(56) Documents cités:
**FR-A- 2 281 578**          **US-A- 4 731 591**

# Description

La présente invention conceme un détecteur de proximité inductif du type comportant une bobine de détection d'objets métalliques faisant partie d'un circuit oscillant, un oscillateur excitant le circuit oscillant sous une fréquence constante, un circuit de traitement du signal engendré par le circuit oscillant et un circuit de sortie, ainsi qu'un dispositif pour accorder la fréquence du circuit oscillant avec la fréquence de l'oscillateur.

Le signal engendré par le circuit oscillant est variable en fonction de l'approche d'un objet métallique. Dans un tel détecteur, il est souhaitable d'accorder la fréquence du circuit oscillant sur celle de l'oscillateur pour disposer d'une bonne sensibilité de détection. Si l'on choisit de régler la fréquence propre du circuit oscillant en faisant varier la capacité de ce circuit, la latitude de réglage est limitée par le fait que les composants disponibles actuellement - capacités variables ou diodes semiconductrices à capacité variable - n'offrent à ce jour que des faibles plages de variation, de l'ordre de quelques centaines de pF. L'écart relatif en fréquence qu'il est possible d'obtenir est donc très réduit, à moins d'utiliser des capacités de volume rédhibitoire.

Il est possible d'interposer entre l'oscillateur et le circuit oscillant un diviseur de fréquence. Cette solution est cependant d'autant moins souple que la précision de réglage nécessaire est grande. En outre, pour obtenir le degré de réglage souhaité, elle requiert une fréquence très élevée, donc des composants rapides; la réalisation en est par conséquent onéreuse.

Il est d'autre part connu d'après le brevet US-4 731 591 de modifier, dans un détecteur de proximité à circuit résonnant couplé à un oscillateur, la fréquence du circuit résonnant au moyen d'une capacité mise en parallèle avec celle du circuit résonnant en réponse à la commutation du signal de sortie du détecteur.

Toutefois ce dispositif assure un simple basculement de fréquence d'une valeur à une autre et ne permet pas d'ajuster de façon analogique la fréquence du circuit résonnant.

L'invention a pour but de remédier à ces inconvénients par recours à une solution simple et à large plage de réglage, bien adaptée aux détecteurs de proximité inductifs.

Selon l'invention, le dispositif d'accord est un amplificateur disposé en parallèle au circuit oscillant, de manière à recevoir sur une entrée le signal de tension de celui-ci ; l'amplificateur d'accord étant bouclé à l'aide d'une impédance inductive ou capacitive et comprenant des moyens de réglage de gain pour accorder la fréquence du circuit oscillant sur celle de l'oscillateur.

De préférence, le signal de tension du circuit oscillant est appliqué à une entrée de l'amplificateur parallèle de réglage via un étage suiveur en tension.

On étalonne ainsi aisément le détecteur de proximité par réglage d'une simple résistance propre à un circuit simple et bien adapté au détecteur. De plus, la variation de l'impédance du dispositif d'accord, vue de l'entrée, peut s'effectuer en tant que multiple de la valeur de l'impédance réactive de bouclage.

La description va être faite à présent d'une forme d'exécution de l'invention, en regard des dessins annexés.

- La figure 1 est un schéma de principe d'un détecteur de proximité équipé du dispositif d'accord conforme à l'invention.

- La figure 2 montre un mode de réalisation du dispositif d'accord.

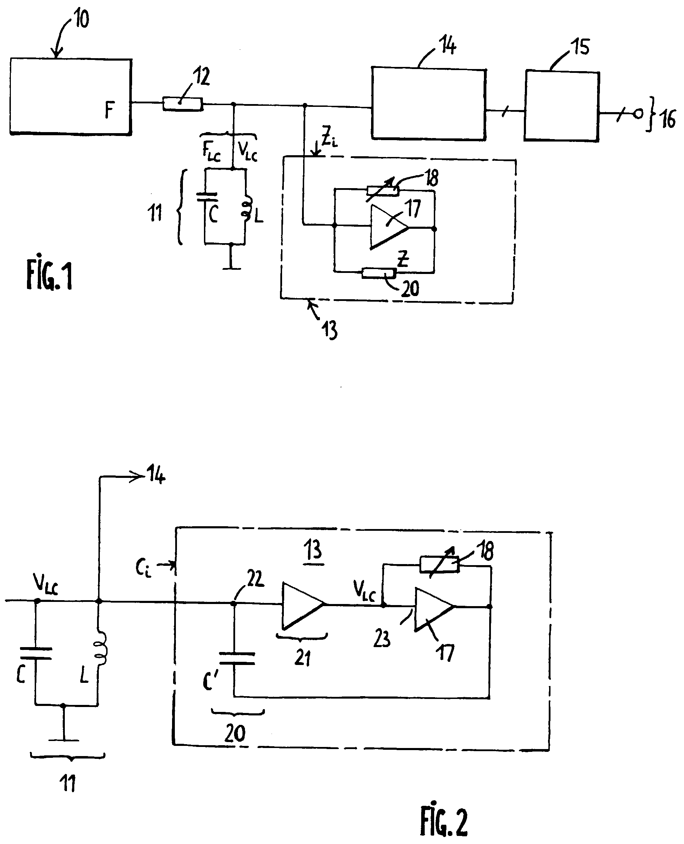

Le détecteur de proximité illustré sur la figure 1 est de type inductif et comprend un oscillateur 10 à fréquence fixe F, par exemple imposée par un quartz ou un résonateur céramique, ainsi qu'un circuit oscillant ou résonnant 11 de fréquence propre $F_{LC}$ constitué par la mise en parallèle d'une capacité C et d'une inductance L. Une borne du circuit oscillant est reliée d'une part à l'oscillateur via une impédance de découplage 12, d'autre part à un dispositif d'accord 13 et à un circuit de traitement 14 du signal engendré par le circuit oscillant; celui-ci est suivi d'un circuit de sortie 15 lui-même susceptible d'être relié à une source d'énergie (réseau de distribution) et à une charge par des bornes de connexion 16 ; les circuits 14 et/ou 15 comprennent des moyens amplificateurs appropriés.

Lorsqu'un objet métallique approche de la bobine L du circuit oscillant, le signal sinusoïdal de tension $V_{LC}$ engendré par celui-ci est modifié et cette modification est prise en compte par les circuits 14 et 15 pour alimenter ou désalimenter la charge. Le dispositif d'accord 13 a pour but de permettre le réglage de la fréquence $F_{LC}$ du signal du circuit oscillant pour l'amener à la valeur F ou à une valeur déterminée suffisamment proche de F pour conférer au détecteur la sensibilité recherchée.

Le dispositif d'accord 13 est disposé en parallèle au circuit oscillant et comprend (figure 1) un amplificateur linéaire inverseur 17 muni de moyens de réglage de gain 18 et dont la sortie est bouclée sur l'entrée au moyen d'une impédance inductive ou capacitive 20. Il est aisé de démontrer que par application de l'effet Miller si $Z_i$ désigne la valeur de l'impédance d'entrée du dispositif 13 et Z celle de l'impédance 20, $Z_i = \frac{Z}{1-A}$ , A étant le gain en tension réglable de l'amplificateur. Si l'impédance 20 est une capacité C', la capacité d'entrée $C_i$ du dispositif d'accord 13 est donc égale à (1-A) C' et le dispositif d'accord fonctionne en multiplicateur de capacité. Si l'impédance est une inductance L', la self d'entrée $L_i$ est égale à $\frac{L'}{1-A}$ et le dispositif fonctionne en diviseur d'inductance.

Comme le gain A est ajustable par le moyen de réglage 18 qui est par exemple constitué par une simple résistance, l'impédance parallèle $Z_i$ est ajustable et permet d'ajuster la fréquence $F_{LC}$ du circuit oscillant à la valeur souhaitée.

On a représenté sur la figure 2 un mode de réalisation du dispositif d'accord. L'impédance associée à l'amplificateur est une capacité C', plus simple à réaliser et intégrer qu'une inductance, vue du circuit oscillant avec la valeur $C_i = (1-A) C'$. Un étage suiveur en tension 21 est disposé entre le point de bouclage 22 de la capacité C' et l'entrée 23 de l'amplificateur inverseur linéaire 17. Cet étage suiveur, constitué par tout circuit connu, évite d'altérer le coefficient de qualité du circuit oscillant $L_C$ en accroissant l'impédance d'entrée de l'amplificateur 17 tout en conservant sensiblement la valeur $V_{LC}$ du signal engendré par le circuit oscillant. La valeur de la capacité C' et la plage de réglage du gain A sont fonction de l'intervalle et de la finesse de réglage souhaités.

L'accord de la fréquence du circuit oscillant est ainsi de mise en oeuvre très souple ; l'ajustage qui en résulte peut être très précis et stable grâce aux valeurs de gain très élevées de l'amplificateur opérationnel et à l'utilisation de composants - résistance et capacité - à faible dérive ; ces composants sont banaux et faciles à intégrer. La plage de variation obtenue est très grande ; en effet, la capacité de bouclage étant assez élevée, par exemple de l'ordre du nF, du fait que l'on opère à fréquence assez basse, la capcité Ci vue de l'entrée est un multiple de cette capacité de bouclage et peut varier de 0 à quelques centaines de nF. L'amplificateur, décrit sous la forme d'un amplificateur opérationnel, peut aussi être un amplificateur à transistors.

## Revendications

1. Détecteur de proximité inductif comportant une bobine de détection d'objets métalliques faisant partie d'un circuit oscillant, un oscillateur excitant le circuit oscillant sous une fréquence constante, un circuit de traitement du signal engendré par le circuit oscillant et un circuit de sortie comprenant des moyens amplificateurs, ainsi qu'un dispositif disposé en parallèle au circuit oscillant et apte à modifier la fréquence du circuit oscillant,
caractérisé par le fait que :

   - le dispositif de modification de la fréquence du circuit oscillant (13) est un amplificateur de réglage (17), qui reçoit sur une entrée le signal de tension ($V_{LC}$) du circuit oscillant (11) et a sa sortie bouclée sur l'entrée à l'aide d'une impédance inductive ou capacitive (20),
   - l'amplificateur de réglage (17) comprend des moyens de réglage de gain (18) pour accorder la fréquence ($F_{LC}$) du circuit oscillant sur celle (F) de l'oscillateur.

2. Détecteur de proximité selon la revendication 1, caractérisé par le fait que le signal de tension ($V_{LC}$) du circuit oscillant (11) est appliqué à une entrée de l'amplificateur parallèle d'accord (17) via un étage suiveur en tension (21).

## Patentansprüche

1. Induktiver berührungsloser Taster, der eine zu einem Schwingkreis gehörende Tastspule für Metallobjekte, einen den Schwingkreis mit einer konstanten Frequenz erregenden Oszillator, einen das vom Schwingkreis erzeugte Signal weiterverarbeitenden Stromkreis und einen Verstärkermittel umfassenden Ausgangsstromkreis umfaßt, sowie eine zum Schwingkreis parallelgeschaltete Einrichtung, die dazu geeignet ist, die Schwingkreisfrequenz zu ändern, dadurch gekennzeichnet, daß:

   - die Einrichtung zur Änderung der Frequenz des Schwingkreises (13) ein Regelverstärker (17) ist, der an einem Eingang das Spannungssignal ($V_{LC}$) des Schwingkreises (11) empfängt und dessen Ausgang über ein induktives oder kapazitives Impedanzglied (20) zur Schleife geschaltet ist,
   - der Regelverstärker (17) Mittel zum Regulieren des Verstärkungsgrads (18) umfaßt, um die Frequenz ($F_{LC}$) des Schwingkreises auf die (F) des Oszillators abzustimmen.

2. Berührungsloser Taster nach Patentanspruch 1, dadurch gekennzeichnet, daß das Spannungssignal ($V_{LC}$) des Schwingkreises (11) an einen Eingang des parallelen Abstimmverstärkers (17) über eine spannungsverfolgende Stufe (21) angelegt wird.

## Claims

1. Inductive proximity detector comprising a metallic object detection coil forming part of an oscillating circuit, an oscillator exciting the oscillating circuit at a constant frequency, a signal processing circuit to process the signal generated by the oscillating circuit and an output circuit comprising amplifier means, and a device placed in parallel with the oscillating circuit and capable of modifying the frequency of the oscillating circuit,
characterized by the fact that:

   - the device modifying the frequency of the oscillating circuit (13) is an adjustment amplifier (17), into which the voltage signal ($V_{LC}$) from the oscillating circuit (11) is input, and its output is looped back to the input through an inductive or capacitive impedance (20),
   - the adjustment amplifier (17) comprises gain adjustment means (18) for matching the frequency ($F_{LC}$) of the oscillating circuit to the frequency (F) of the oscillator.

2.  Proximity detector according to claim 1, characterized by the fact that the voltage signal ($V_{LC}$) of the oscillating circuit (11) is applied to an input of the parallel matching amplifier (17) through a voltage follower stage (21).

FIG.1

FIG.2

5